(19) **Europäisches Patentamt** / **European Patent Office** / **Office européen des brevets**

(11) **EP 2 125 660 B1**

(12) **FASCICULE DE BREVET EUROPEEN**

(45) Date de publication et mention
de la délivrance du brevet:
**16.03.2011 Bulletin 2011/11**

(51) Int Cl.:
***C04B 35/48*** (2006.01)

(21) Numéro de dépôt: **07872429.1**

(86) Numéro de dépôt international:
**PCT/FR2007/002146**

(22) Date de dépôt: **21.12.2007**

(87) Numéro de publication internationale:
**WO 2008/096071 (14.08.2008 Gazette 2008/33)**

(54) **MATERIAU CERAMIQUE REFRACTAIRE A HAUTE TEMPERATURE DE SOLIDUS, SON PROCEDE DE FABRICATION ET PIECE DE STRUCTURE INCORPORANT LEDIT MATERIAU**

FEUERFESTE KERAMIK MIT HOHER SOLIDUSTEMPERATUR, HERSTELLUNGSVERFAHREN DAFÜR UND STRUKTURTEIL MIT BESAGTER KERAMIK

REFRACTORY CERAMIC HAVING A HIGH SOLIDUS TEMPERATURE, ITS MANUFACTURING PROCESS AND STRUCTURAL PART INCORPORATING SAID CERAMIC

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.12.2006 FR 0611175**

(43) Date de publication de la demande:
**02.12.2009 Bulletin 2009/49**

(73) Titulaires:
• **Commissariat à l'Énergie Atomique et aux Énergies Alternatives
75015 Paris (FR)**
• **Ecole Nationale Superieure de Ceramique Industrielle
87100 Limoges (FR)**

(72) Inventeurs:
• **PILUSO, Pascal
F-84120 Pertuis (FR)**
• **FERRIER, Mélusine
F-75010 Paris (FR)**
• **BONNET, Jean-Pierre
F-33360 Carignan-de-Bordeaux (FR)**

(74) Mandataire: **Jelsch, Emmanuel Edwin
Katzarov S.A.,
Rue des Epinettes 19
1227 Geneva (CH)**

(56) Documents cités:
**EP-A1- 0 554 637    DE-A1- 4 237 272**

**EP 2 125 660 B1**

**Description**

**DOMAINE TECHNIQUE**

La présente invention a trait au domaine des matériaux réfractaires à base d'oxydes et concerne en particulier un matériau réfractaire à haute température de solidus, son procédé de fabrication et une pièce de structure incorporant ce matériau.

**ETAT DE LA TECHNIQUE ANTERIEURE**

Dans une centrale nucléaire, une défaillance des moyens d'évacuation de la puissance résiduelle du réacteur nucléaire peut induire une perte du refroidissement du combustible nucléaire. Dans certains cas, cette perte pourrait aboutir à la fusion partielle ou totale du coeur. La probabilité d'un tel accident, bien qu'extrêmement faible, est non nulle.

Afin de prévenir et de gérer les conséquences d'un tel accident tant sur la population que sur l'environnement, on simule un accident grave de coeur de réacteur nucléaire (notamment un Réacteur à Eau sous Pression (REP)) en faisant fondre dans un four à induction, constitué de matériaux réfractaires à base d'oxydes, des tronçons de crayons de combustibles nucléaires préalablement irradiés.

Au cours de ces expériences dans lesquelles on fait varier la température (pouvant aller jusqu'à 2600°C) et l'atmosphère (par exemple neutre ou oxydante), le comportement du combustible nucléaire est étudié, les produits de fission et les actinides relâchés sont identifiés et analysés.

Les pièces réfractaires à base d'oxydes du four doivent au moins répondre aux critères suivants :

- une résistance mécanique jusqu'à une température de 2600°C,
- une étanchéité aux gaz générés lors de l'expérimentation,
- une résistance chimique à différents types d'atmosphères (notamment réductrice, oxydante, neutre, comprenant de l'air, de la vapeur d'eau),
- une résistance chimique pendant au moins 15 minutes à la corrosion et/ou à l'ablation à haute température pouvant être provoquées par des bains constitués d'oxydes et de métaux. De telles interactions sont par exemple générées lors du contact du matériau réfractaire avec le corium. Ce dernier est un magma qui résulte de la fusion à haute température du combustible nucléaire puis de la réaction du combustible fondu avec sa gaine et les éléments de la structure du réacteur nucléaire. Il est le plus souvent composé de bains corrosifs d'oxydes et de métaux, chauffés au-dessus de leur température de fusion ou de solidus. Ces oxydes sont notamment les oxydes d'uranium, de zirconium et de fer.

Afin de répondre à de tels critères, les pièces réfractaires de ces fours étaient fabriquées jusqu'en 2003 en dioxyde de thorium $ThO_2$, oxyde dont la température de fusion est de 3380°C.

Toutefois, le dioxyde de thorium $ThO_2$ étant radioactif, il est contraignant à mettre en oeuvre et on cherche à le remplacer par un autre matériau réfractaire non radioactif qui réponde par ailleurs aux critères exposés ci-dessus. Un matériau envisageable est le dioxyde de hafnium $HfO_2$.

Le dioxyde de hafnium $HfO_2$ présente trois structures cristallines ayant chacune leur domaine de stabilité en fonction de la température et de la pression. A la pression atmosphérique, ces domaines sont les suivants :

- en dessous de 1700°C : structure monoclinique,
- de 1700°C à 2600°C : structure quadratique,
- de 2600°C à 2810°C : structure cubique,
- au delà de 2810°C : état liquide.

Le dioxyde de hafnium $HfO_2$ présente une température de fusion de 2810°C et est par ailleurs bien connu pour résister aux interactions chimiques à chaud. Il semble donc constituer un bon candidat pour remplacer le dioxyde de thorium $ThO_2$ en tant que matériau réfractaire rentrant dans la composition des pièces des fours permettant de réaliser les simulations précitées.

Le dioxyde de hafnium $HfO_2$ pur présente néanmoins un inconvénient majeur pour les applications à haute température, à savoir que lors de cycles (montée/descente) de températures, sa transformation allotropique de la phase monoclinique vers la phase quadratique s'accompagne d'une contraction (ou d'une expansion volumique lors de la transformation inverse) de 3,4 % entre 1500°C et 1800°C. Cette importante variation volumique a pour conséquence rédhibitoire la fissuration du matériau céramique réfractaire constitué de dioxyde de hafnium $HfO_2$.

De par le document US 5,681,784, il est connu que cette variation volumique peut être évitée en stabilisant, à l'aide d'additifs, le dioxyde de hafnium $HfO_2$ dans sa phase cubique (phase haute température). Pour cela, on ajoute, au matériau en dioxyde de hafnium HfO$_2$, 8 % à 12 % en moles d'oxyde d'yttrium Y$_2$O$_3$ et 0,25 % à 4 % en poids d'aides au frittage. Le matériau ainsi constitué présente une température de solidus peu élevée (bien inférieure à 2500°C) qui le rend impropre à son utilisation en tant que matériau réfractaire constitutif des fours de simulation précités.

**EXPOSE DE L'INVENTION**

Un des buts de l'invention est donc de fournir un matériau céramique réfractaire à base de dioxyde de hafnium HfO$_2$ qui ne se fissure pas lors de cycles de montée et de descente en température incluant l'intervalle 1500°C-1800°C.

Un autre but de l'invention est de fournir un matériau céramique réfractaire à base de dioxyde de hafnium HfO$_2$ qui possède une température de solidus supérieure à 2500°C.

Un but supplémentaire de l'invention est de réaliser un procédé de fabrication par métallurgie des poudres d'un tel matériau céramique réfractaire et une pièce de structure incorporant ce matériau.

L'invention a donc pour objet un matériau céramique réfractaire possédant une température de solidus comprise entre 2500°C et 2800°C, présentant une compacité supérieure à 85 % et dont la microstructure est telle que le matériau est composite et comprend :

- des grains de dioxyde de hafnium HfO$_2$ de structure monoclinique ;
- des grains de dioxyde de hafnium HfO$_2$ de structure cubique stabilisée par de l'oxyde d'yttrium Y$_2$O$_3$, l'oxyde d'yttrium Y$_2$O$_3$ représentant 0,5 % à 8 % en moles par rapport au nombre total de moles de dioxyde de hafnium HfO$_2$ ;
- des pores fermés ;
- des pores ouverts qui ne sont pas interconnectés.

Avantageusement, la température de solidus du matériau céramique réfractaire obtenu par le procédé de l'invention est comprise entre 2500°C et 2800°C. La température de solidus est la température en dessous de laquelle les dernières parties liquides du matériau en cours de solidification se sont solidifiées. Elle est considérée à pression atmosphérique.

Par ailleurs, on entend par « pores fermés » des pores ne communiquant pas avec la surface du matériau et par « pores ouverts » des pores communiquant avec la surface du matériau, ces pores ouverts présentant en outre la particularité de ne pas être interconnectés.

Une des caractéristiques essentielles du matériau céramique réfractaire selon l'invention est la quantité particulière d'oxyde d'yttrium Y$_2$O$_3$ qu'il contient, à savoir une quantité de 0,5 % à 8 % en moles par rapport au nombre total de moles de dioxyde de hafnium HfO$_2$ (monoclinique et cubique). Une telle quantité fait en sorte que le matériau est composite, à savoir qu'il comprend le dioxyde de hafnium HfO$_2$ dans deux phases cristallines distinctes et réparties de façon homogène dans l'ensemble du volume du matériau, à savoir une phase comprenant des grains à structure cubique (stabilisée par de l'oxyde d'yttrium Y$_2$O$_3$) et une phase comprenant des grains à structure monoclinique.

De par ce caractère composite, le matériau n'est que partiellement stabilisé par la formation d'une solution solide de structure cubique.

Cela présente l'avantage à la fois i) d'éviter l'expansion volumique précitée et ii) de préserver au mieux une haute température de solidus, la plus proche possible de la température de fusion du dioxyde de hafnium HfO$_2$ pur, tout en évitant l'ajout d'aides au frittage lors de la fabrication du matériau qui peuvent abaisser la température d'utilisation.

Par ailleurs, le matériau céramique réfractaire selon l'invention présente une compacité supérieure à 85 %, ce qui en fait un matériau suffisamment dense pour présenter une bonne tenue mécanique, en particulier jusqu'à 2600°C, et pour confiner le plus possible les gaz générés par exemple lors des expériences de simulation précitées.

La compacité étant le complément de la porosité, le matériau céramique réfractaire selon l'invention présente une porosité inférieure ou égale à 15 %. L'unité de mesure de la compacité ou de la porosité est le pourcentage volumique. La porosité est constituée à la fois de pores ouverts et de pores fermés.

Avantageusement, les pores du matériau céramique réfractaire de l'invention sont, pour une part importante, fermés.

Ainsi, préférentiellement, les pores fermés représentent 1 % à 15 % du volume de ce matériau. Les pores ouverts du matériau représentent quant à eux moins de 3 %, préférentiellement moins de 1 %, encore plus préférentiellement environ 0,5 %, du volume du matériau. Ces pores ouverts ne sont pas interconnectés, ce qui a pour effet, pour de tels pores, qu'ils ne traversent pas le matériau céramique réfractaire. Optionnellement, pour une partie ou la totalité des pores fermés du matériau céramique réfractaire de l'invention, les pores fermés ne sont pas interconnectés.

Le caractère fermé d'une part importante des pores, ainsi que le fait que les pores ouverts ne sont pas interconnectés, renforce l'étanchéité aux gaz du matériau céramique réfractaire selon l'invention et augmente la résistance chimique aux gaz et aux liquides en diminuant la surface d'échange disponible.

L'invention a également pour objet un procédé de fabrication par métallurgie des poudres du matériau céramique réfractaire selon l'invention comprenant les étapes successives suivantes :

(i) obtention d'un mélange sec d'une poudre de dioxyde de hafnium HfO$_2$ et d'une poudre d'oxyde d'yttrium **Y$_2$O$_3$,** chacun de ces oxydes étant mélangé selon les proportions en moles dans lesquelles il se trouve dans le matériau céramique,

(ii) granulation par pelletisation du mélange sec sous agitation afin d'obtenir un mélange granulé, la granulation comprenant la pulvérisation dans le mélange sec d'une solution aqueuse comprenant, par rapport au poids du mélange sec, 5 % en poids d'alcool polyvinylique (PVA) de masse moléculaire comprise entre 50000 et 90000 g/mol et 5 % en poids de polyéthylène glycol (PEG) de masse moléculaire comprise entre 180 et 420 g/mol,

(iii) séchage du mélange granulé puis remplissage d'un moule avec ledit mélange granulé,

(iv) pressage uniaxial du mélange granulé afin d'obtenir un mélange compact, le pressage comprenant l'application d'une contrainte de mise en forme palier de 20 MPa à 50 MPa, préférentiellement égale à 30 MPa,

(v) frittage du mélange compact afin d'obtenir le matériau céramique réfractaire.

Le PVA et le PEG compris dans la solution aqueuse jouent respectivement le rôle de liant et de plastifiant. Ils sont éliminés par pyrolyse lors de la montée en température permettant d'atteindre la température de frittage.

De façon générale, la répartition homogène d'une faible quantité de poudre dans une autre est un problème délicat. Ce problème est d'autant plus compliqué que le mélange sec de la présente invention comprend deux poudres dont les densités sont assez différentes (à savoir : densité HfO$_2$ pur = 9,68 g.cm$^{-3}$; densité Y$_2$O$_3$ pur = 5 g.cm$^{-3}$).

Or, il est très important d'obtenir un mélange sec dans lequel ces deux poudres sont réparties de façon homogène puisque l'augmentation de la teneur de Y$_2$O$_3$ dans une zone du matériau peut produire des contraintes rendant le matériau inapte au frittage et après frittage produire un matériau hétérogène et provoquer une importante diminution de la température de solidus dans cette zone, et donc une fragilité de l'ensemble du matériau céramique, ce qui impose son utilisation à des températures inférieures à celles prévues.

Les inventeurs ont découvert que seule une étape de granulation par pelletisation associée à la solution aqueuse spécifique de l'invention permet de produire un mélange granulé dans lequel d'une part les poudres de HfO$_2$ et de **Y$_2$O$_3$** sont réparties de façon homogène, et d'autre part les granules denses ont à la fois une tenue mécanique suffisante pour être manipulés et une déformation autorisant un aplatissement au cours de l'étape de pressage. Au sens de l'invention, on entend notamment par « granulation par pelletisation » un procédé dans lequel on pulvérise une suspension organique sur une poudre céramique en rotation dans un plateau tournant incliné.

Après séchage, le mélange granulé obtenu est fritté afin d'obtenir un matériau céramique réfractaire selon l'invention qui est à la fois composite (c'est à dire que les grains de dioxyde de hafnium HfO$_2$ sont de deux types, à savoir des grains de structure monoclinique et de structure cubique stabilisée par de l'oxyde d'yttrium Y$_2$O$_3$) et homogène (ces grains sont répartis de façon homogène dans l'ensemble du volume du matériau).

Ce matériau est non fissuré et une part importante de sa porosité est fermée. Sans vouloir être lié à une quelconque théorie, cette porosité fermée, inattendue, peut être attribuée à l'effet Kirkendall propre au couple HfO$_2$-Y$_2$O$_3$. Cela est d'autant plus inattendu que, malgré la quantité significative de plastifiant contenu dans la solution aqueuse (à savoir 5 % en poids de polyéthylène glycol), le matériau céramique obtenu par le procédé de l'invention n'en reste pas moins suffisamment dense, sa compacité ayant été mesurée comme étant supérieure à 85 %.

D'autres objets, caractéristiques et avantages de l'invention apparaîtront mieux à la lecture de la description qui suit, donnée à titre illustratif et non limitatif.

**BREVE DESCRIPTION DES DESSINS**

L'invention comporte aussi deux figures annexées qui sont explicitées dans les exemples ci-après.

Les Figures 1A, 1B, 1C et 1D représentent des micrographies de matériaux céramiques réfractaires de l'invention réalisées à l'aide d'un Microscope Electronique à Balayage (MEB) en mode électrons rétrodiffusés.

La Figure 2 représente la cartographie obtenue avec un Spectromètre à Dispersion d'Energie d'un matériau céramique réfractaire de l'invention, ainsi qu'à titre de référence une micrographie réalisée à l'aide d'un MEB en mode électrons rétrodiffusés.

La Figure 3 reproduit un tableau regroupant différentes caractéristiques (relatives notamment à la microstructure) de matériaux céramiques réfractaires selon l'invention.

La Figure 4A représente une micrographie MEB en électrons secondaires d'un matériau céramique réfractaire de l'invention (grossissement d'un facteur 55). La Figure 4B est un agrandissement de la partie supérieure gauche de la Figure 4A.

Les figures 5A et 5B représentent des micrographies MEB en électrons secondaires pour des matériaux céramiques réfractaires de l'invention ayant subi un traitement permettant de révéler certaines de leurs caractéristiques microstructurales.

## DESCRIPTION DETAILLEE DE L'INVENTION

1 - Exemple 1: Fabrication par métallurgie des poudres de matériaux céramiques réfractaires comprenant 1 % en moles de $Y_2O_3$.

1.1 - Mélange à sec des poudres de $HfO_2$ et de $Y_2O_3$.

Afin de réaliser un matériau céramique réfractaire à base de $HfO_2$ comprenant 1 % en moles de $Y_2O_3$, on a mélangé 99,93 g d'une poudre de $HfO_2$ et 1,07g d'une poudre de $Y_2O_3$ représentant respectivement 99 % en moles et 1 % en moles du mélange final.

La poudre de dioxyde de hafnium $HfO_2$, fournie par la Société CEZUS (France), avait les caractéristiques suivantes :

- Pureté = 99,9 % en poids.
- Surface spécifique (BET) = 12,99 $m^2$/g.
- Taille des particules denses (BET) = 47,6 nm, calculée d'après la surface spécifique en supposant que les grains étaient sphériques.
- Taille moyenne de grains = 2 $\mu$m, mesurée par voie humide avec un granulomètre laser après ajout d'un dispersant qui était le polyméthacrylate d'ammonium (commercialisé sous le nom de DARWAN C).
- Système cristallin : essentiellement monoclinique (densité = 9,7 $g.cm^{-3}$).

La Surface Spécifique (BET) et la taille des particules denses (BET) sont déterminées par adsorption d'azote conformément à la norme ISO 9277:1995 établie à partir de la méthode Brunauer-Emmett-Teller (dite BET).

Les principaux éléments chimiques constituant des impuretés (en ppm en poids par rapport au dioxyde de hafnium $HfO_2$) étaient les suivants :

| A1 | < | 100 | Co | < | 20 | Fe | < | 100 |
|----|---|-----|----|---|----|----|---|-----|
| Ca | < | 25 | Cr | < | 20 | Mg | < | 20 |
| Cd | < | 20 | Cu | < | 100 | Mn | < | 0 |
| Mo | < | 20 | P | < | 20 | Ti | < | 100 |
| Na | < | 20 | Pb | < | 20 | V | < | 20 |
| Ni | < | 100 | Sn | < | 20 | | | |

La poudre d'oxyde d'yttrium **$Y_2O_3$,** fournie par la Société PIDC (USA), avait les caractéristiques suivantes :

- Pureté = 99,999 % en poids.
- Densité = 5,01.
- Surface spécifique (BET) = 2,38 $m^2$/g.
- Taille des particules denses (BET) = 0,5 $\mu$m, calculée d'après la surface spécifique en supposant que les grains étaient sphériques.
- Taille moyenne de grains = 3 $\mu$m, mesurée par voie humide avec un granulomètre laser après ajout de dispersant DARWAN C.

Les poudres ont été mélangées à sec à l'aide d'un mélangeur de poudres céramiques non spécifique (de type Turbula$^\odot$ dans le cas présent) pendant un temps minimum de 20 minutes.

1.2 - Granulation par pelletisation.

Afin de réaliser la granulation par pelletisation du mélange sec de poudres, son agitation a été poursuivie dans un plateau tournant incliné tout en pulvérisant progressivement dans le mélange sec de poudres une solution aqueuse comprenant de l'alcool polyvinylique (PVA) de masse moléculaire comprise entre 50000 et 90000 g/mol et du polyéthylène glycol 300 (PEG 300), la quantité de PVA et la quantité de PEG pulvérisées représentant chacune 5 % en poids par rapport au poids du mélange sec de poudres.

Au sens de l'invention, le PEG 300 est un polyéthylène glycol de masse moléculaire comprise entre 285 et 315 g/mol.

1.3 - <u>Séchage.</u>

Le mélange granulé obtenu a été séché à l'étuve à 50°C jusqu'à ce que les granules soient sèches, soit dans le cas présent au bout de 20 minutes. Une température de séchage comprise entre 40°C et 60°C peut également convenir. Elle permet de ne pas trop durcir le liant (PVA), ce qui rendrait les granules incompressibles lors du pressage.

1.4 - <u>Tamisage.</u>

Le mélange granulé et séché obtenu par « voie sèche » lors des étapes précédentes a ensuite été introduit dans une tamiseuse automatique pour subir un double tamisage afin qu'il ne contienne plus que des granules dont la taille était comprise entre 60 et 250 $\mu$m. Cette taille de granules est suffisamment grosse pour présenter de bonnes propriétés d'écoulement permettant le bon remplissage du moule. Elle est par ailleurs suffisamment petite pour que les granules n'induisent pas de défaut de pressage, tel que par exemple un manque local du mélange qui peut être à l'origine d'un macro-pore non-éliminable lors du frittage.

1.5 - <u>Pressage.</u>

Afin d'obtenir un mélange compact, le mélange des poudres granulées a été introduit dans un moule en forme de pastille. La matrice de pressage avait un diamètre de 25 mm. Le moule était en acier. On a veillé à ce que le remplissage du moule se fasse lentement afin qu'il soit le plus complet possible, ceci afin d'éviter d'introduire des défauts non éliminables lors du frittage. Le mélange des poudres granulées a ensuite été soumis au cycle de pressage suivant dans lequel la pression de compactage a subi les variations suivantes :

- augmentation de la pression selon une vitesse de 0,1 MPa/s pour atteindre une contrainte de mise en forme palier (ou pression palier) de 30 MPa qui a été maintenue pendant 2 minutes, puis
- diminution de la contrainte de mise en forme palier de 30 MPa selon une vitesse de 0,1 MPa/s afin d'atteindre la pression atmosphérique.

Alternativement, l'augmentation de la pression peut être effectuée selon au moins une vitesse comprise entre 0,1 et 1 MPa/s, la contrainte de mise en forme palier peut être au moins de 20 MPa et ne doit en tous cas pas excéder trop fortement 50 MPa (pour atteindre par exemple une valeur de 100 MPa) afin de prévenir toute fissuration du matériau après frittage, le maintien de la contrainte de mise en forme palier peut être effectuée pendant une durée comprise entre 60 s et 180 s et sa diminution peut être effectuée selon une vitesse comprise entre 0,1 et 1 MPa/s afin d'atteindre la pression atmosphérique.

A l'issue de ce pressage, on a obtenu une pastille compacte de diamètre = 13 mm et d'épaisseur = 2 mm.

Préférentiellement, les pièces de structures selon l'invention sont de géométrie telle qu'elles présentent une épaisseur de matière inférieure ou égale à 10 mm selon au moins un plan de coupe considéré, ceci afin de faciliter l'élimination du liant et/ou du plastifiant lors de l'étape de frittage.

1.6 - <u>Frittage.</u>

La pastille compacte a été frittée sous air selon le cycle suivant : montée en température selon une vitesse de 5°C/min jusqu'à une température de 1600°C maintenue pendant un palier de 1 heure, puis descente en température suivant l'inertie du four.

Différents cycles de frittage sous air ont été testés pour évaluer l'influence de la température et du temps de palier sur la compacité et la porosité ouverte. Ces tests ont permis de déterminer qu'un cycle de frittage qui peut également convenir comprend le chauffage du mélange compact à une température comprise entre 1550°C et 1650°C, pendant une durée comprise entre 30 minutes et 90 minutes. Si de telles conditions ne sont pas respectées un taux de porosité ouverte peu propice au confinement de gaz peut être obtenu.

Par ailleurs, d'autres tests ont permis de mettre en évidence que pour un même cycle de frittage, plus la teneur d'oxyde d'yttrium $Y_2O_3$ est importante moins le retrait au frittage est grand et plus la température à laquelle la pastille compacte commence à densifier est élevée (900°C pour une pastille de $HfO_2$ pur contre 1200°C pour une pastille de $HfO_2$ comprenant 8% en moles de $Y_2O_3$).

Avantageusement, les températures de solidus du matériau céramique réfractaire de l'invention doivent être comprises entre 2500°C et 2800°C. Pour obtenir ce matériau avec une compacité suffisante, on s'attend donc à appliquer une température de frittage élevée, en tous cas bien supérieure à la limite pouvant être atteinte par les fours de frittage standards qui ne dépassent pas en général 1700°C à 1800°C.

Même si d'autres fours peuvent produire des températures supérieures à 1800°C, ils travaillent généralement sous atmosphère neutre ou réductrice et sont peu développés en industrie. Ces fours utilisent le plus souvent des éléments chauffants et des matériaux réfractaires en carbone. Or le carbone interagit avec le dioxyde de hafnium $HfO_2$, ce qui rend impropre l'utilisation de tels fours pour fritter un mélange de poudres comprenant du $HfO_2$.

De façon inattendue, bien que l'étape de frittage selon l'invention comprenne un chauffage à des températures voisines de 1600°C, elle permet néanmoins d'obtenir un matériau céramique de compacité suffisante qui présente une part importante de porosité fermée. Cela autorise par ailleurs l'emploi de fours standard.

1.7 - Usinage-rectification.

Afin de réaliser une pièce de structure d'un four de simulation, la pastille de matériau céramique réfractaire obtenue à l'étape précédente a été usinée pour lui donner une forme de picot. L'usinage n'a créé aucune fissure au niveau du matériau.

2 - Example 2 : Fabrication par métallurgie des poudres de matériaux céramiques réfractaires comprenant 3 %, 5 % et 8 % en moles de $Y_2O_3$

Des matériaux céramiques réfractaires à base de $HfO_2$ comprenant respectivement 0,5 %, 3 %, 5 % et 8 % de $Y_2O_3$ ont été fabriqués selon un procédé identique à celui de l'exemple 1, si ce n'est que les quantités en poudre de $Y_2O_3$ mises en oeuvre dans l'étape (i) de mélange ont été adaptées afin d'obtenir les proportions en moles souhaitées dans le matériau céramique.

3 - Microstructure des matériaux céramiques réfractaires comprenant 1 %, 3 %, 5 % et 8 % en moles de $Y_2O_3$.

3.1 - Détermination par diffraction des rayons X de la fraction volumique du matériau occupée par les grains de dioxyde de hafnium $HfO_2$ de structure monoclinique et cubique.

Les fractions volumiques des phases monoclinique et cubique au sein du matériau ont été déterminées.

Pour cela, le principe est de réaliser un spectre de diffraction des rayons X et de comparer l'intensité de la raie 111 de la phase cubique, à la somme des intensités des raies combinaison de 1 et -1 de la phase monoclinique.

Les intensités de ces raies sont néanmoins corrigées pour séparer les pics de ces phases cubique et monoclinique situés dans des domaines angulaires proches.

Puisque le dioxyde d'hafnium $HfO_2$ présente un diagramme de diffraction semblable à celui de la zircone $ZrO_2$, cette correction a été réalisée à partir des donnés de la zircone selon les travaux de D.L PORTER et A.H HEURE (Journal of American Ceramist Society, 1979, 62 (5-6), 298-305).

Ces auteurs ont mis en évidence (en tenant compte de la notion de facteur de multiplicité et du coefficient d'absorption linéaire) que la fraction volumique $V_m$ de la phase monoclinique dans une zircone stabilisée par de la magnésie MgO pouvait s'écrire :

```
Vm = (1,6031 x Im(11-1)) / (1,6031 x Im(11-1) +
Ic(111)),
```

avec Im(11-1) et Ic (111) désignant respectivement l'intensité de la raie de diffraction X de la phase monoclinique et cubique.

Par analogie avec les travaux de PORTER et al., la fraction volumique occupée par les grains de dioxyde de hafnium $HfO_2$ de structure monoclinique et cubique a donc été déterminée pour les matériaux céramiques réfractaires comprenant 1 %, 3 %, 5 % et 8 % de $Y_2O_3$ élaborés dans les exemples précédents en y mesurant l'intensité des raies de diffraction X de la phase de dioxyde de hafnium $HfO_2$ monoclinique et cubique.

Le tableau 1 regroupe ces résultats. Il indique également la fraction volumique que la phase cubique devait théoriquement occuper d'après le diagramme de phase $HfO_2$-$Y_2O_3$ extrait du document N. ISUPOVA et al., « The HfO2-Y2O3 system in the region rich in hafnium dioxyde », Inorganic material, 1969, 11, n°5, 1658-1661.

Tableau 1

| Mol % $Y_2O_3$ | % monoclinique | % cubique | % cubique théorique |
|---|---|---|---|
| 1 % | 90 % | 10 % | 0 % |

(suite)

| Mol % $Y_2O_3$ | % monoclinique | % cubique | % cubique théorique |
|---|---|---|---|
| 3 % | 61 % | 39 % | 13 % |
| 5 % | 57 % | 43 % | 50 % |
| 8 % | 37 % | 63 % | 87 % |

De façon inattendue, malgré ce qu'indique le diagramme de phase $HfO_2$-$Y_2O_3$, la fraction volumique occupée par les grains de dioxyde de hafnium $HfO_2$ de structure cubique est, par rapport à ce qui était théoriquement attendu, supérieure pour les matériaux céramiques réfractaires comprenant 1 % et 3 % de $Y_2O_3$ et inférieure pour les matériaux céramiques réfractaires comprenant 5 % et 8 % de $Y_2O_3$. Le matériau céramique réfractaire de l'invention est ainsi un matériau qui est hors équilibre thermodynamique. Avantageusement, cela permet d'obtenir une stabilisation par les grains de dioxyde de hafnium $HfO_2$ de structure cubique qui est judicieusement dosée, c'est à dire de telle façon que le matériau céramique réfractaire selon l'invention possède une température de solidus suffisamment élevée tout en ne se fissurant pas lors d'un refroidissement comprenant le passage à une température d'environ 1700°C.

3.2 - Répartition dans le volume du matériau des grains de dioxyde de hafnium $HfO_2$ de structure monoclinique et cubique.

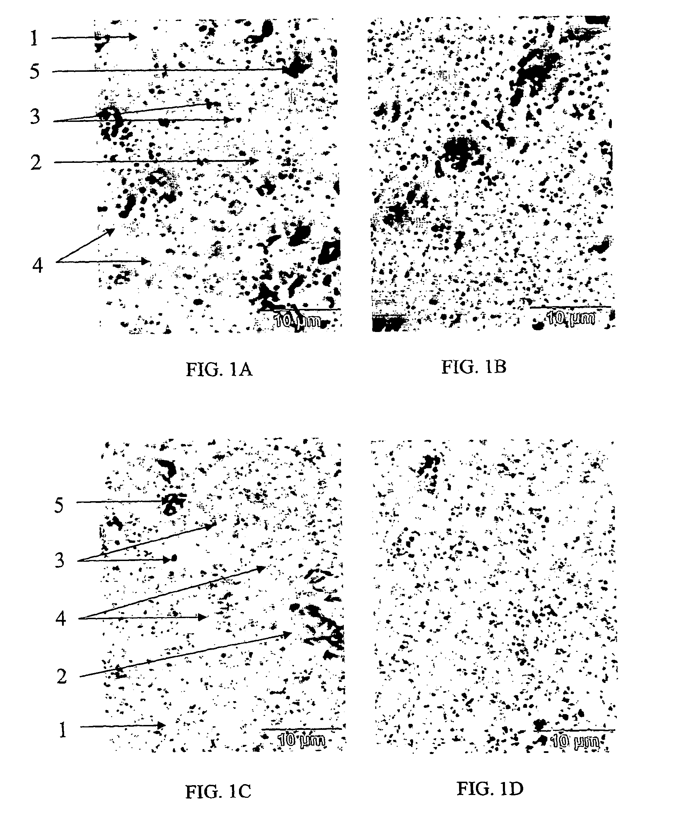

Les matériaux céramiques réfractaires des exemples précédents ont été analysés à l'aide d'un MEB en mode électrons rétrodiffusés. Les micrographies correspondant aux matériaux céramiques réfractaires comprenant 8 %, 5 %, 3 % et 1 % de $Y_2O_3$ sont représentées respectivement sur les Figures 1A, 1B, 1C et 1D. Dans les micrographies ainsi obtenues, le niveau de gris est inversement proportionnel au nombre atomique moyen de l'élément chimique analysé. L'oxyde d'yttrium $Y_2O_3$, contenu dans la phase de dioxyde de hafnium $HfO_2$ cubique stabilisé (2), correspond donc aux zones en gris foncé.

Sans vouloir être lié à une quelconque théorie, la présence de la phase de dioxyde de hafnium $HfO_2$ cubique stabilisé (2) autour d'au moins un pore fermé (3) suggère l'intervention de l'effet Kirkendall. Cet effet est causé par la différence entre les vitesses de diffusion des deux cations yttrium $Y^{3+}$ et hafnium $Hf^{4+}$ dans la phase cubique et fait en sorte que le volume occupé avant le frittage par les grains de $Y_2O_3$ est remplacé en fin de frittage par un pore. Sans prendre en compte la réunion de plusieurs pores (5), il apparaît que les pores fermés ont une taille moyenne de 3 $\mu m$ (préférentiellement comprise entre 1 $\mu m$ et 10 $\mu m$, ce qui correspond à la taille moyenne que peuvent présenter les grains de la poudre d'oxyde d'yttrium $Y_2O_3$, taille qui peut être déterminée par granulométrie laser tel que précédemment).

3.2.1 - Matériaux céramiques réfractaires comprenant 3 %, 5 % et 8 % en moles de $Y_2O_3$.

Pour les matériaux comprenant 8%, 5 % et 3 % de $Y_2O_3$, les grains de la phase de dioxyde de hafnium $HfO_2$ cubique stabilisé (2) par 3 % à 8 % en moles de l'oxyde d'yttrium $Y_2O_3$ subissent une ségrégation puisqu'ils se répartissent principalement autour d'au moins un pore fermé (3). Ils forment ainsi dans le dioxyde de hafnium $HfO_2$ monoclinique (1) des inclusions (4) comprenant chacune au moins ce pore fermé (3).

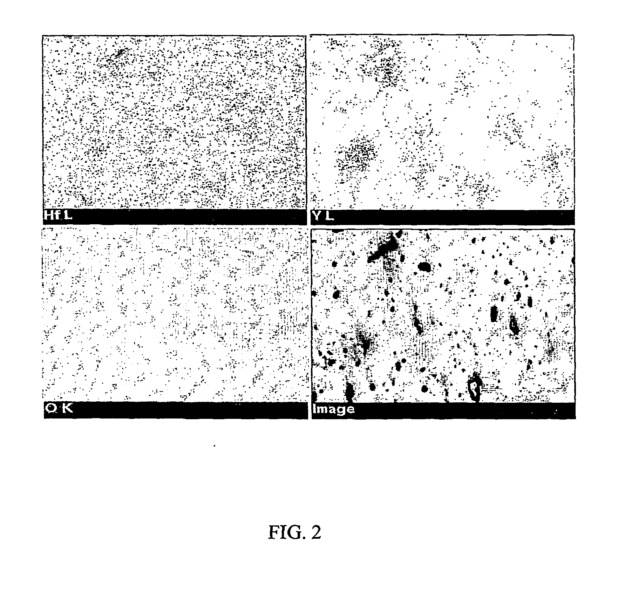

Avec pour exemple le matériau comprenant 8 % de $Y_2O_3$, cette ségrégation est confirmée par la cartographie réalisée avec un Spectromètre à Dispersion d'Energie représentée sur les clichés du haut de la Figure 2.

Les clichés de la Figure 2 en haut à gauche et à droite donnent la répartition au sein de ce matériau respectivement de l'élément hafnium et de l'élément yttrium. Ces deux clichés permettent donc de confirmer l'homogénéité de répartition du dioxyde de hafnium $HfO_2$ et la ségrégation sous forme d'inclusions de l'oxyde d'yttrium $Y_2O_3$ qui constitue l'élément dopant et stabilisant des grains de la phase de dioxyde de hafnium $HfO_2$ cubique (2).

Les clichés de la Figure 2 en bas à gauche et à droite représentent respectivement la cartographie réalisée avec un Spectromètre à Dispersion d'Energie pour l'élément oxygène et à titre de référence un cliché MEB en mode électrons rétrodiffusés du matériau comprenant 8 % de $Y_2O_3$.

3.2.2 - Matériaux céramiques réfractaires comprenant 1 % en moles de $Y_2O_3$.

Pour les matériaux comprenant 1 % de $Y_2O_3$ (typiquement pour lesquels les grains du dioxyde de hafnium $HfO_2$ cubique sont stabilisés par 0,7 % à 1,5 % en moles d'oxyde d'yttrium $Y_2O_3$), les grains du dioxyde de hafnium $HfO_2$ cubique sont répartis de manière homogène dans l'ensemble du volume du matériau céramique. La réunion de plusieurs pores (5) a pratiquement disparu du matériau.

La répartition est homogène en ce sens qu'on ne peut détecter, à l'aide d'un cliché MEB en mode électrons rétrodiffusés, de ségrégation, d'inclusions (4) de la phase de dioxyde de hafnium $HfO_2$ cubique (2) au sein de la phase constituée de dioxyde de hafnium $HfO_2$ monoclinique (1). Ceci a pour effet de renforcer la résistance à la fissuration lors de montées/descentes en température entre 1500°C et 1800°C.

Cette excellente homogénéité dans la microstructure du matériau implique que ce dernier ne possède pas de points dans lesquels l'oxyde d'yttrium $Y_2O_3$ est localement plus concentré que dans le reste du matériau. En d'autres termes, la teneur de 0,7 % à 1,5 %, de préférence 1 %, en moles d'oxyde d'yttrium $Y_2O_3$ est rencontrée en pratique dans l'ensemble du volume du matériau. Ceci a pour avantage que la température de solidus est pratiquement la même en tout point du matériau, à savoir de l'ordre de 2800°C, et qu'elle n'est pas abaissée localement par une teneur en oxyde d'yttrium $Y_2O_3$ plus élevée ce qui entraînerait des points chauds sources de fragilité mécanique pour le matériau.

4 - Caractéristiques des matériaux céramiques réfractaires comprenant 1 %, 3 %, 5 % et 8 % en moles de $Y_2O_3$.

4.1 - Mesure de la compacité.

Afin de déterminer la compacité, le calcul détaillé ci-après pour le matériau céramique réfractaire fabriqué dans l'exemple 2 et comprenant 5 % en moles de $Y_2O_3$ a été mené de la façon suivante :

1) La densité de la phase cubique de dioxyde de hafnium $HfO_2$ comprenant 5 % en moles de $Y_2O_3$ (phase appelée dans la suite du calcul « solution solide cubique ») a été calculée à l'aide des données du document précité de N. ISUPOVA. Les auteurs de ce document ont mis en évidence que le paramètre de maille du dioxyde de hafnium $HfO_2$ en phase cubique varie avec le pourcentage de $Y_2O_3$ et la température de calcination.

A partir de ce document, les grandeurs cristallographiques de la solution solide cubique résultant d'une calcination à 1600°C peuvent être estimées. Le paramètre de maille de la solution solide cubique est ainsi estimé à 5,105 Å. Le volume de la maille est donc : $V_{maille\ 5\%} = (5,105.10^{-10})^3 = 1,3304.10^{-28}\ m^3.$

Ces auteurs ont également établi que la solution solide cubique a une structure du type fluorite de formule $(Hf_{(1-2x)}\ Y_{2x})\ O_{(2-x)}$. Cette structure présente un nombre de motif Z = 4.

Par ailleurs, puisque 100 moles de solution solide cubique contiennent 5 % en moles de $Y_2O_3$, alors x = 0,05 moles.

Pour la solution solide cubique, la masse molaire (M molaire 5 %), la masse d'une maille (m 5%), et la densité sont donc calculées de la façon suivante :

i)

```
M molaire 5 % = (1-2 x) M Hf + 2x M Y + (2-x) M O

= (1-(2 x 0,05)) x 178,5) + (2 x 0,05 x 88,9) + (2 -

0,05) x 16 = 200,74 g/mol
```

ii)

```
m 5 % = M molaire 5 % / Nombre d'Avogadro
      = 200, 74 / 6,023.10²³ = 3,33.10⁻²² g
```

iii)

```
densité 5 % = (m 5 % x Z )/ V(cm³)
            = (3,33.10⁻²² x 4)/ 1,3304.10⁻²² = 10,01 g.cm⁻³
```

2) la densité théorique de chaque matériau a ensuite été calculée en considérant les contributions respectives des densités des phases de dioxyde de hafnium $HfO_2$ monoclinique (Dm = 9,68 g/cm³) et cubique en fonction de la fraction volumique que chaque phase occupe dans le matériau.

Le calcul à partir des valeurs du tableau 2 est le suivant :

```
Densité (HfO₂-HfO₂+5%Y₂O₃) = (Vm x Dm) + (Vc x Dc) =
9,84 g.cm⁻³
```

Tableau 2

| HfO₂ + 5 % en moles de Y₂O₃ fritté à 1600°C pendant 1h | | | |
|---|---|---|---|
| Phase monoclinique | | Phase cubique à 5 % en moles de Y₂O₃ | |
| Fraction volumique (Vm) | Densité (Dm) | Fraction volumique (Vc) | Densité (Dc) |
| 56,8 % | 9,68 g/cm3 | 43,2 % | 10,01 g/cm3 |
| Densité totale = 9,84 g.cm⁻³ | | | |

3) La compacité de la solution solide cubique est calculée en faisant le rapport entre la densité théorique déterminée au point 2 et la densité mesurée selon la méthode usuelle par géométrie :

```
compacité = (8,78 / 9,84) x 100 = 90,8 %.
```

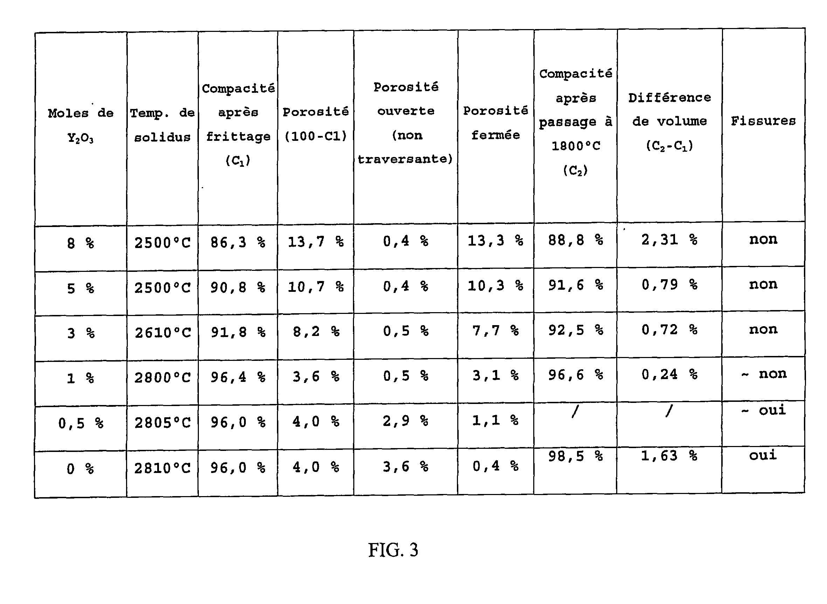

Des calculs similaires ont été menés pour les matériaux céramiques réfractaires à 1 %, 3 % et 8 % en moles de **Y₂O₃** (tels que fabriqués dans les exemples 1 et 2 précédents) ainsi que pour les matériaux correspondants avec 0 % et 0,5 % en moles de Y₂O₃. Les compacités (notées $C_1$) ainsi déterminées sont présentées dans le tableau 3 reproduit sur la Figure 3.

4.2 - Mesure d'autres caractéristiques.

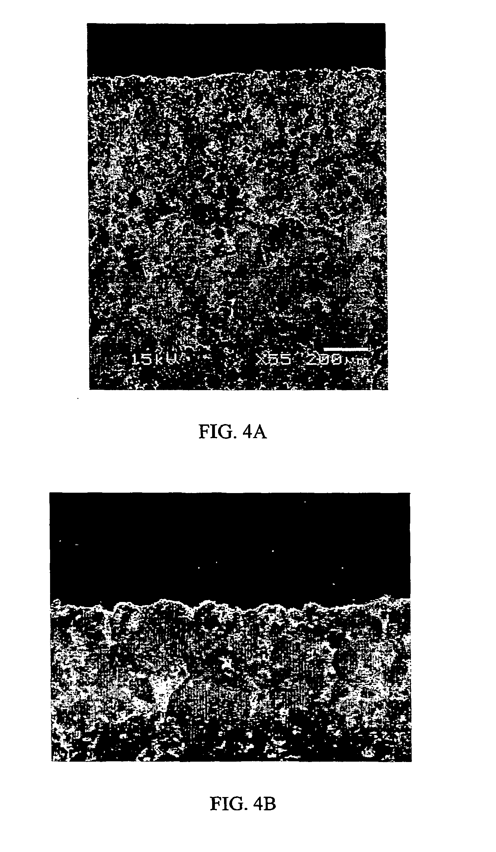

D'autres caractéristiques ont été déterminées pour les matériaux céramiques élaborés dans les exemples précédents. Les résultats sont regroupés dans le tableau 3 reproduit sur la Figure 3. Ils ont été obtenus comme suit.
Comme indiqué auparavant, la porosité est le complément de la compacité (notée $C_1$) telle que calculée dans l'exemple précédent (ces deux grandeurs sont exprimées en pourcentage volumique du matériau). La porosité est alors déterminée en soustrayant la compacité au volume total du matériau céramique réfractaire de l'invention.
Par ailleurs, la porosité est de deux types : ouverte ou fermée. La porosité ouverte est mesurée par une méthode connue de l'homme du métier telle que la méthode d'immersion réalisée avec une cloche à vide. Sa soustraction à la porosité totale permet d'obtenir la valeur de la porosité fermée.
Quant au caractère non interconnecté de la porosité ouverte du matériau céramique réfractaire de l'invention, il s'apprécie qualitativement à l'aide de méthodes connues de l'homme du métier qui montrent le caractère non traversant de tels pores.
Parmi ces méthodes, figure un test d'étanchéité tel que le test de bullage. Ce test consiste à plonger dans un récipient d'eau un échantillon du matériau, par exemple un tube fermé à une extrémité. De l'air est ensuite injecté sous pression à l'intérieur du tube dont l'extrémité fermée est dirigée vers le haut. Si la porosité ouverte est « traversante », l'air va traverser la paroi du tube jusqu'à ce que des bulles d'air se forment à sa surface externe. En revanche si les pores ouverts ne sont pas interconnectés, le tube est étanche et aucune bulle d'air n'apparaît.
Une autre méthode consiste à réaliser plusieurs coupes dans le matériau et examiner à l'aide d'un cliché réalisé à l'aide d'un MEB en électrons secondaires si les pores ouverts de ce matériau sont interconnectés ou non. A titre d'exemple, les Figures 4A et 4B représentent un tel cliché MEB réalisé sur une coupe d'un matériau céramique réfractaire de l'invention comprenant 3 % en moles de **Y₂O₃.** Elles montrent clairement que les pores débouchant à la surface du matériau (pores ouverts) ne sont pas interconnectés. Cette méthode peut aussi être utilisée pour déterminer le caractère interconnecté ou non des pores fermés.
La compacité $C_2$ a également été mesurée. Elle correspond à la compacité du matériau après passage à 1800°C. Elle a été déterminée selon la méthodologie exposée au point 4.1, après avoir maintenu les matériaux céramiques pendant 30 minutes à une température de 1800°C puis en les laissant refroidir selon l'inertie du four. Elle n'a pas été mesurée pour le matériau céramique comprenant 0,5 %.
La différence entre les compacités $C_1$ et $C_2$ permet de déterminer l'amplitude de la différence de volume du matériau céramique lors d'un refroidissement comprenant le passage à une température d'environ 1700°C.
Enfin, aucune fissuration n'a été constatée sur les matériaux céramiques comprenant 3 à 8 % de Y₂O₃. La fissuration observée du matériau céramique comprenant 1 % de $Y_2O_3$ était très superficielle. Les fissures sont apparues uniquement sur les bords de la pastille, aucune autre fissure n'a été détectée par microscopie optique.

A la lecture des différentes caractéristiques du tableau 3 de la Figure 3, il ressort notamment que :

- les matériaux céramiques réfractaires de l'invention comprenant de 3 % à 8 % en moles de $Y_2O_3$ peuvent présenter une porosité comprise entre 8 % et 15 % et une porosité fermée comprise entre 7 % et 15 %. La porosité ouverte est généralement d'environ 0,5 %.
- les matériaux céramiques réfractaires de l'invention comprenant de 3 % à 5 % en moles de $Y_2O_3$ peuvent présenter une porosité comprise entre 8 % et 11 % et une porosité fermée comprise entre 7 % et 11 %. La porosité ouverte est généralement d'environ 0,5 %.
- les matériaux céramiques réfractaires de l'invention comprenant entre 0,7 % à 1,5 % en moles de $Y_2O_3$ peuvent présenter au moins une des caractéristiques suivantes : une porosité comprise entre 4 % et 6 %, une porosité fermée comprise entre 1 % et 5 %, une porosité ouverte comprise entre 0,5 % et 2 % qui croît lorsque le nombre de moles de $Y_2O_3$ décroît, une compacité de 96 % à 97 %, des grains de dioxyde de hafnium $HfO_2$ cubique qui occupent entre 5 % et 18 % du volume dudit matériau céramique.

Par ailleurs, préférentiellement, la microstructure des matériaux céramiques réfractaires selon l'invention comprenant 0,5 % à 8 % en moles d'oxyde d'yttrium **$Y_2O_3$** est telle que :

- les grains de dioxyde de hafnium $HfO_2$ de structure monoclinique présentent une forme allongée et/ou une taille moyenne comprise entre 1 $\mu$m et 3 $\mu$m,
- les grains de dioxyde de hafnium $HfO_2$ de structure cubique stabilisée par de l'oxyde d'yttrium **$Y_2O_3$** présentent une forme symétrique de section carrée et/ou une taille moyenne comprise entre 3 $\mu$m et 15 $\mu$m.

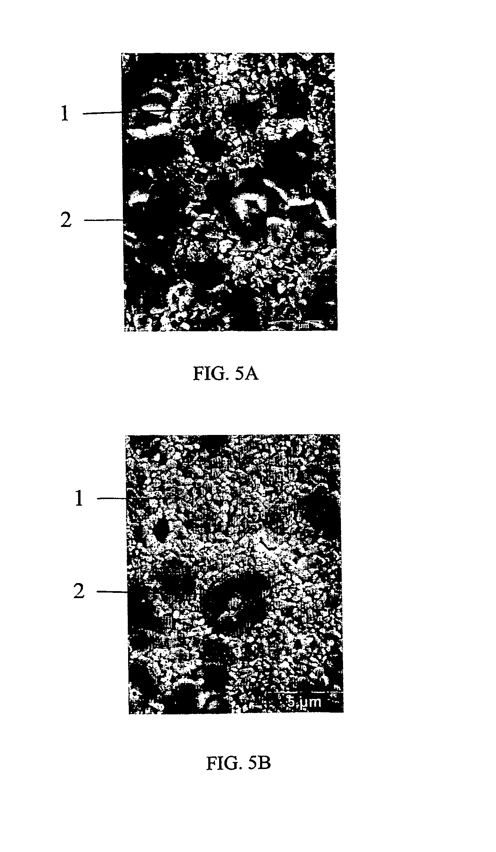

Ces caractéristiques microstructurales peuvent notamment être déterminées à l'aide de clichés MEB du matériau de l'invention, après traitement par une méthode connue de l'homme du métier tel qu'un polissage suivi d'une attaque thermique ou chimique aux joints de grain. Les figures 5A et 5B représentent de tels clichés pour les matériaux céramiques réfractaires de l'invention comprenant respectivement 8 % et 5 % en moles d'oxyde d'yttrium $Y_2O_3$. Elles font clairement apparaître certaines des caractéristiques microstructurales précitées pour les grains de dioxyde de hafnium $HfO_2$ de structure monoclinique (1) et cubique (2) stabilisée par de l'oxyde d'yttrium $Y_2O_3$.

Les matériaux céramiques comprenant 1 % en moles (en pratique de 0,7 % à 1,5 %) de $Y_2O_3$ se sont révélés particulièrement intéressants car ils conjuguent une haute température de solidus, un taux de porosité fermée pouvant être élevé, une bonne résistance à la fissuration, une compacité élevée et une faible expansion volumique lors d'un refroidissement en dessous de 1800°C. Leur compacité (et donc leur densité) élevée a également pour conséquence que ces matériaux présentent une meilleure tenue mécanique, en particulier jusqu'à une température de 2600°C.

Il ressort clairement de la description ci-dessus que la microstructure d'un matériau céramique réfractaire présentant une compacité supérieure à 85 % lui confère des propriétés le rendant apte à rentrer dans la composition des pièces de structure des fours destinés à étudier le comportement d'un combustible nucléaire lors d'un accident de fusion d'un coeur de réacteur nucléaire. En particulier, un tel matériau ne se fissure pas lors de cycles de montée et de descente en température incluant l'intervalle 1500°C-1800°C et possède une température de solidus supérieure à 2500°C.

De façon plus générale, un tel matériau peut également entrer dans la composition d'un appareil d'appareils d'analyses thermiques à hautes températures tel que des appareils d'Analyse Thermo-gravimétrique (ATG), d'Analyse Thermique Différentielle (ATD) ou un dilatomètre.

## Revendications

**1.** Matériau céramique réfractaire possédant une température de solidus comprise entre 2500°C et 2800°C, présentant une compacité supérieure à 85 % et dont la microstructure est telle que ledit matériau est composite et comprend :

- des grains de dioxyde de hafnium $HfO_2$ de structure monoclinique (1);
- des grains de dioxyde de hafnium $HfO_2$ de structure cubique (2) stabilisée par de l'oxyde d'yttrium **$Y_2O_3$,** ledit oxyde d'yttrium $Y_2O_3$ représentant 0,5 % à 8 % en moles par rapport au nombre total de moles de dioxyde de hafnium $HfO_2$;
- des pores fermés (3);
- des pores ouverts qui ne sont pas interconnectés.

**2.** Matériau céramique réfractaire selon la revendication 1, **caractérisé en ce que** lesdits pores ouverts représentent moins de 3 %, préférentiellement moins de 1 %, encore plus préférentiellement environ 0,5 %, du volume dudit matériau céramique.

**3.** Matériau céramique réfractaire selon la revendication 1 ou 2, **caractérisé en ce que** ledit dioxyde de hafnium $HfO_2$ cubique est stabilisé par 3 % à 8 % en moles d'oxyde d'yttrium $Y_2O_3$ afin de former dans ledit dioxyde de hafnium $HfO_2$ monoclinique des inclusions (4) comprenant chacune au moins un pore fermé (3).

**4.** Matériau céramique réfractaire selon la revendication 3, **caractérisé en ce que** ledit dioxyde de hafnium $HfO_2$ cubique est stabilisé par 3 % à 5 % en moles d'oxyde d'yttrium $Y_2O_3$.

**5.** Matériau céramique réfractaire selon la revendication 3 ou 4, **caractérisé en ce que** lesdits pores fermés présentent une taille moyenne de 3 $\mu$m.

**6.** Matériau céramique réfractaire selon l'une quelconque des revendications 3 à 5, **caractérisé en ce que** lesdits grains de dioxyde de hafnium $HfO_2$ monoclinique occupent 37 % à 61 % du volume dudit matériau céramique.

**7.** Matériau céramique réfractaire selon la revendication 1 ou 2, **caractérisé en ce que** les grains dudit dioxyde de hafnium $HfO_2$ cubique sont stabilisés par 0,7 % à 1,5 % en moles d'oxyde d'yttrium $Y_2O_3$.

**8.** Matériau céramique réfractaire selon la revendication 7, **caractérisé en ce que** ledit matériau présente une compacité de 96 % à 97 %.

**9.** Matériau céramique réfractaire selon la revendication 7 ou 8, **caractérisé en ce que** ledit dioxyde de hafnium $HfO_2$ cubique est stabilisé par 1 % en moles d'oxyde d'yttrium **$Y_2O_3$.**

**10.** Matériau céramique réfractaire selon la revendication 9, **caractérisé en ce que** les grains dudit dioxyde de hafnium $HfO_2$ cubique occupent 10 % du volume dudit matériau céramique.

**11.** Matériau céramique réfractaire selon la revendication 9 ou 10, **caractérisé en ce que** ledit matériau possède une température de solidus d'environ 2800°C.

**12.** Matériau céramique réfractaire selon l'une quelconque des revendications 9 à 11, **caractérisé en ce que** les grains dudit dioxyde de hafnium $HfO_2$ cubique sont répartis de manière homogène dans l'ensemble du volume dudit matériau céramique.

**13.** Procédé de fabrication par métallurgie des poudres du matériau céramique réfractaire selon l'une quelconque des revendications précédentes, comprenant les étapes successives suivantes :

(i) obtention d'un mélange sec d'une poudre de dioxyde de hafnium $HfO_2$ et d'une poudre d'oxyde d'yttrium **$Y_2O_3$,** chacun de ces oxydes étant mélangé selon les proportions en moles dans lesquelles il se trouve dans ledit matériau céramique,

(ii) granulation par pelletisation dudit mélange sec sous agitation afin d'obtenir un mélange granulé, ladite granulation comprenant la pulvérisation dans ledit mélange sec d'une solution aqueuse comprenant, par rapport au poids dudit mélange sec, 5 % en poids d'alcool polyvinylique (PVA) de masse moléculaire comprise entre 50000 et 90000 g/mol et 5 % en poids de polyéthylène glycol (PEG) de masse moléculaire comprise entre 180 et 420 g/mol,

(iii) séchage dudit mélange granulé puis remplissage d'un moule avec ledit mélange granulé,

(iv) pressage uniaxial dudit mélange granulé afin d'obtenir un mélange compact, ledit pressage comprenant l'application d'une contrainte de mise en forme palier de 20 MPa à 50 MPa, préférentiellement égale à 30 MPa,

(v) frittage dudit mélange compact afin d'obtenir ledit matériau céramique réfractaire.

**14.** Procédé de fabrication par métallurgie des poudres selon la revendication 13, **caractérisé en ce que** ladite solution comprend par rapport au poids dudit mélange sec 5 % en poids d'alcool polyvinylique (PVA) de masse moléculaire comprise entre 50000 et 90000 g/mol et 5 % en poids de polyéthylène glycol de masse moléculaire comprise entre 285 et 315 g/mol (PEG 300).

**15.** Procédé de fabrication par métallurgie des poudres selon la revendication 13 ou 14, **caractérisé en ce que** lesdites étapes (i) de mélange et/ou (ii) de granulation sont réalisées sous agitation desdites poudres et/ou dudit mélange sec à l'aide d'un mélangeur de poudres céramiques.

16. Procédé de fabrication par métallurgie des poudres selon l'une quelconque des revendications 13 à 15, **caractérisé en ce que** ledit séchage comprend le chauffage dudit mélange à une température comprise entre 40°C et 60°C, préférentiellement égale à 50°C.

17. Procédé de fabrication par métallurgie des poudres selon l'une quelconque des revendications 13 à 16, **caractérisé en ce qu'**après ladite étape de séchage (iii) et avant ladite étape de pressage (iv), ledit mélange granulé est tamisé afin qu'il ne contienne plus que des granules dont la taille est comprise entre 60 et 250 $\mu$m.

18. Procédé de fabrication par métallurgie des poudres selon l'une quelconque des revendications 13 à 17, **caractérisé en ce que** ladite étape de pressage (iv) comprend les étapes successives suivantes :

- augmentation de la pression selon au moins une vitesse comprise entre 0,1 et 1 MPa/s, et préférentiellement égale à 0,1 MPa/s pour atteindre une contrainte de mise en forme palier comprise entre 20 et 50 MPa, de préférence égale à 30 MPa,
- maintien de ladite contrainte de mise en forme palier pendant une durée comprise entre 60 s et 180 s, et préférentiellement égale à 120 s,
- diminution de ladite contrainte de mise en forme palier selon une vitesse comprise entre 0,1 et 1 MPa/s, et préférentiellement égale à 0,1 MPa/s, afin d'atteindre la pression atmosphérique.

19. Procédé de fabrication par métallurgie des poudres selon l'une quelconque des revendications 13 à 18, **caractérisé en ce que** ledit frittage comprend le chauffage dudit mélange compact à une température comprise entre 1550°C et 1650°C, de préférence égale à 1600°C, pendant une durée comprise entre 30 minutes et 90 minutes, de préférence égale à 60 minutes.

20. Procédé de fabrication par métallurgie des poudres selon l'une quelconque des revendications 13 à 19, **caractérisé en ce qu'**après l'étape (v) de frittage, il comprend en outre une étape d'usinage (vi) dudit matériau céramique réfractaire.

21. Pièce de structure comprenant le matériau céramique réfractaire selon l'une quelconque des revendications 1 à 12.

**Claims**

1. A refractory ceramic material possessing a solidus temperature between 2500°C and 2800°C, having a compactness greater than 85%, and a microstructure such that said material is composite and comprises:

- hafnium dioxide $HfO_2$ grains having a monoclinic structure (1);
- hafnium dioxide $HfO_2$ grains having a cubic structure (2) which is stabilized by yttrium oxide $Y_2O_3$, said yttrium oxide $Y_2O_3$ representing 0.5 mol % to 8 mol % relative to the total number of moles of hafnium dioxide $HfO_2$;
- closed pores (3);
- non-interconnected open pores.

2. The refractory ceramic material according to claim 1, **characterized in that** said open pores represent less than 3%, preferably less than 1%, and still more preferably about 0.5%, of the volume of said ceramic material.

3. The refractory ceramic material according to claim 1 or 2, **characterized in that** said cubic hafnium dioxide $HfO_2$ is stabilized by 3 mol % to 8 mol % yttrium oxide $Y_2O_3$ in order to form inclusions (4), each comprising at least one closed pore (3), within said monoclinic hafnium dioxide $HfO_2$.

4. The refractory ceramic material according to claim 3, **characterized in that** said cubic hafnium dioxide $HfO_2$ is stabilized by 3 mol % to 5 mol % yttrium oxide $Y_2O_3$.

5. The refractory ceramic material according to claim 3 or 4, **characterized in that** said closed pores have an average size of 3 $\mu$m.

6. The refractory ceramic material according to any one of claims 3 to 5, **characterized in that** said grains of monoclinic hafnium dioxide $HfO_2$ occupy from 37% to 61% of the volume of said ceramic material.

7. The refractory ceramic material according to claim 1 or 2, **characterized in that** the grains of said cubic hafnium dioxide $HfO_2$ are stabilized by 0.7 mol % to 1.5 mol % yttrium oxide $Y_2O_3$.

8. The refractory ceramic material according to claim 7, **characterized in that** said material has a compactness of 96% to 97%.

9. The refractory ceramic material according to claim 7 or 8, **characterized in that** said cubic hafnium dioxide $HfO_2$ is stabilized by 1 mol % yttrium oxide $Y_2O_3$.

10. The refractory ceramic material according to claim 9, **characterized in that** the grains of said cubic hafnium dioxide $HfO_2$ occupy 10% of the volume of said ceramic material.

11. The refractory ceramic material according to claim 9 or 10, **characterized in that** said material has a solidus temperature of about 2800°C.

12. The refractory ceramic material according to any one of claims 9 to 11, **characterized in that** the grains of said cubic hafnium dioxide $HfO_2$ are homogeneously distributed throughout the volume of said ceramic material.

13. A powder metallurgy process for the manufacture of the refractory ceramic material according to any one of the preceding claims, comprising the consecutive steps of:

    (i) obtaining a dry mixture of a hafnium dioxide $HfO_2$ powder and an yttrium oxide $Y_2O_3$ powder, each of these oxides being mixed in the molar proportions in which it is found in said ceramic material,
    (ii) step of granulation by pelletization of said dry mixture under stirring in order to obtain a granulated mixture, said granulation step comprising the spraying, into the dry mixture, of an aqueous solution comprising, relative to the weight of the dry mixture, 5% by weight of polyvinyl alcohol (PVA) having a molecular weight in the range between 50000 and 90000 g/mol and 5% by weight of polyethylene glycol (PEG) having a molecular weight in the range between 180 and 420 g/mol,
    (iii) drying of said granulated mixture and then filling of a mold with said granulated mixture,
    (iv) uniaxial pressing of said granulated mixture in order to obtain a compact mixture, said pressing comprising the application of a plateau shaping stress of 20 MPa to 50 MPa, preferably 30 MPa, and
    (v) sintering of said compact mixture in order to obtain the refractory ceramic material.

14. The powder metallurgy manufacturing process according to claim 13, **characterized in that** said solution comprises, relative to the weight of said dry mixture, 5% by weight of polyvinyl alcohol (PVA) having a molecular weight in the range between 50000 and 90000 g/mol and 5% by weight of polyethylene glycol having a molecular weight in the range between 285 and 315 g/mol (PEG 300).

15. The powder metallurgy manufacturing process according to claim 13 or 14, **characterized in that** said mixing step (i) and/or granulation step (ii) are carried out by stirring said powders and/or said dry mixture, by means of a ceramic powder mixer.

16. The powder metallurgy manufacturing process according to any one of claims 13 to 15, **characterized in that** said drying comprises the heating of said mixture to a temperature in the range between 40°C and 60°C, preferably 50°C.

17. The powder metallurgy manufacturing process according to any one of claims 13 to 16, **characterized in that** after said drying step (iii) and before said pressing step (iv), said granulated mixture is screened so that it contains only granules with a size in the range between 60 and 250 $\mu$m.

18. The powder metallurgy manufacturing process according to any one of claims 13 to 17, **characterized in that** said pressing step (iv) comprises the consecutive steps of:

    - increasing pressure according to at least one rate in the range between 0.1 and 1 MPa/s, preferably 0.1 MPa/s, in order to reach a shaping stress plateau in the range between 20 and 50 MPa, preferably 30 MPa,
    - maintaining said shaping stress plateau for a duration in the range between 60 s and 180 s, preferably 120 s,

- decreasing said shaping stress plateau at a rate in the range between 0.1 and 1 MPa/s, preferably 0.1 MPa/s, down to atmospheric pressure.

**19.** The powder metallurgy manufacturing process according to any one of claims 13 to 18, **characterized in that** said sintering comprises the heating of said compact mixture to a temperature in the range between 1550°C and 1650°C, preferably 1600°C, for a duration in the range between 30 minutes and 90 minutes, preferably 60 minutes.

**20.** The powder metallurgy manufacturing process according to any one of claims 13 to 19, **characterized in that** after the sintering step (v), it further comprises the step of machining (vi) said refractory ceramic material.

**21.** A structural part comprising the refractory ceramic material according to any one of claims 1 to 12.

**Patentansprüche**

**1.** Hoch schmelzendes keramisches Material mit einer Solidustemperatur zwischen 2500 °C und 2800 °C, einer Dichte grösser als 85% und einer Microstruktur derart, dass besagtes Material ein Verbundwerkstoff ist und enthält:

- Hafniumdioxid $HfO_2$ Körner die eine monokline Struktur haben (1);
- Hafniumdioxid $HfO_2$ Körner die eine kubische Struktur haben (2), die durch Yttriumoxid $Y_2O_3$ stabilisiert ist, dieses Yttriumoxid $Y_2O_3$ macht 0.5 mol % bis 8 mol % relativ zur gesamten Molanzahl von Hafniumdioxid $HfO_2$ aus;
- geschlossene Poren (3);
- offene Poren, die nicht miteinander verbunden sind.

**2.** Hoch schmelzendes keramisches Material nach Anspruch 1, **dadurch gekennzeichnet, dass** besagte offene Poren weniger als 3%, vorzugsweise weniger als 1% und besonders bevorzugt um 0.5% des Volumens des besagten keramischen Materials ausmachen.

**3.** Hoch schmelzendes keramisches Material nach Anspruch 1 oder 2, **dadurch gekennzeichnet, dass** besagtes kubisches Hafniumdioxid $HfO_2$ durch 3 mol % bis 8 mol % Yttriumoxid $Y_2O_3$ stabilisiert ist, um in besagtem mono-klinem $HfO_2$ Einschlüsse (4) zu bilden, wobei jeder Einschluss wenigstens eine offene Pore enthält.

**4.** Hoch schmelzendes keramisches Material nach Anspruch 3, **dadurch gekennzeichnet, dass** besagtes kubisches Hafniumdioxid $HfO_2$ durch 3 mol % bis 5 mol % Yttriumoxid $Y_2O_3$ stabilisiert ist

**5.** Hoch schmelzendes keramisches Material nach Anspruch 3 oder 4 , **dadurch gekennzeichnet, dass** besagte geschlossenen Poren eine durchschnittliche Grösse von 3 $\mu$m haben.

**6.** Hoch schmelzendes keramisches Material nach einem der Ansprüche 3 bis 5, **dadurch gekennzeichnet, dass** besagte Körner des monoklinen Hafniumdioxids $HfO_2$ 37%-61% des Volumens von besagtem keramischen Material ausmachen.

**7.** Hoch schmelzendes keramisches Material nach Anspruch 1 oder 2, **dadurch gekennzeichnet, dass** die Körner von besagtem kubischen Hafniumdioxid $HfO_2$ durch 0.7 mol % bis 1.5 mol % Yttriumoxid $Y_2O_3$ stabilisiert sind.

**8.** Hoch schmelzendes keramisches Material nach Anspruch 7, **dadurch gekennzeichnet, dass** besagtes Material eine Dichte von 96-97% hat.

**9.** Hoch schmelzendes keramisches Material nach Anspruch 7 oder 8, **dadurch gekennzeichnet, dass** besagtes kubisches Hafniumdioxid $HfO_2$ durch 1 mol % Yttriumoxid $Y_2O_3$ stabilisiert ist.

**10.** Hoch schmelzendes keramisches Material nach Anspruch 9, **dadurch gekennzeichnet, dass** die Körner von besagtem kubischen Hafniumdioxids $HfO_2$ 10% des Volumens von besagtem keramischen Material ausmachen.

**11.** Hoch schmelzendes keramisches Material nach Anspruch 9 oder 10, **dadurch gekennzeichnet, dass** besagtes Material eine Solidustemperatur von etwa 2800 °C hat.

**12.** Hoch schmelzendes keramisches Material nach einem der Ansprüche 9 bis 11, **dadurch gekennzeichnet, dass** die Körner von besagtem kubischen Hafniumdioxid $HfO_2$ im Gesamtvolumen von besagtem keramischen Material homogen verteilt sind.

**13.** Pulvermetallurgisches Verfahren zur Herstellung eines hoch schmelzenden keramischen Materials nach einem der vorhergehenden Ansprüche wobei das Verfahren die aufeinander folgenden Schritte umfasst

(i) Herstellung einer trockenen Mischung von Hafniumdioxid $HfO_2$ Pulver und Yttriumdioxid $Y_2O_3$ Pulver, wobei jedes dieser Oxide in dem molaren Verhältnis gemischt wird in welchem es in besagtem keramischen Material vorhanden ist,

(ii) Granulierung durch Pelletierung dieser trockenen Mischung unter Rühren um eine granulierte Mischung zu erhalten; dieser Granulierungsschritt beinhaltet das Sprühen einer wässrigen Lösung in die trockene Mischung, wobei die wässrige Lösung relativ zum Gewicht der trockenen Mischung 5 Gew% Polyvinylalkohol mit einem Molekulargewicht zwischen 50 000 und 90 000 g/mol und 5 Gew% Polyethylenglykol (PEG) mit einem Molekulargewicht zwischen 180 und 420 g/mol enthält,

(iii) Trocknen dieser granulierten Mischung, danach Füllen eines Formkörpers mit dieser granulierten Mischung;

(iv) Uniaxiales Pressen besagter granulierter Mischung, um eine kompakte Mischung zu erhalten, wobei besagtes Pressen die Anwendung eines formgebenden Spannungs-plateaus von 20 MPa bis 30 MPa umfasst, bevorzugt 30MPa, und

(v) Sintern der kompakten Mischung um ein hoch schmelzendes keramisches Material zu erhalten.

**14.** Pulvermetallurgisches Verfahren nach Anspruch 13, **dadurch gekennzeichnet, dass** besagte Lösung 5 Gew% relativ zum Gewicht der trockenen Mischung Polyvinylalkohol (PVA) mit einem Molekulargewicht zwischen 50 000 und 90 000 g/mol und 5 Gew% Polyethylenglykol mit einem Molekulargewicht zwischen 285 und 315g/mol (PEG 300) enthält.

**15.** Pulvermetallurgisches Verfahren nach Anspruch 13 oder 14, **dadurch gekennzeichnet, dass** der Mischungsschritt (i) und/oder der Granulierungsschritt (ii) durch Durchmischen der besagten Pulver und/oder der besagten trockenen Mischung durchgeführt wird mit Hilfe eines Pulvermischers für keramische Pulver.

**16.** Pulvermetallurgisches Verfahren nach einem der Ansprüche 13 bis 15, **dadurch gekennzeichnet, dass** der Trocknungsvorgang das Erhitzen besagter Mischung auf eine Temperatur zwischen 40 °C und 60 °C beinhaltet, vorzugsweise 50 °C.

**17.** Pulvermetallurgisches Verfahren nach einem der Ansprüche 13 bis 16, **dadurch gekennzeichnet, dass** nach dem Trocknungsvorgang und vor dem Pressvorgang besagte granulierte Mischung gesiebt wird, sodass die Mischung nur Körner mit einer Korngrösse zwischen 60 und 250 $\mu$m aufweist.

**18.** Pulvermetallurgisches Verfahren nach einem der Ansprüche 13 bis 17, **dadurch gekennzeichnet, dass** das Pressen (iv) die aufeinander folgenden Schritte umfasst:

- Erhöhen des Drucks, wobei die Druckerhöhungsgeschwindigkeit mindestens 0.1 bis 1 MPa/s, vorzugsweise 0.1 MPa/s beträgt um ein formgebendes Spannungsplateau im Bereich zwischen 20 und 50 MPa, bevorzugt 30MPa zu erhalten,

- Aufrechterhalten des formgebenden Spannungsplateaus für die Dauer zwischen 60 s und 180 s, bevorzugt 120s,

- Erniedrigen des Drucks bis zum Atmosphärendruck, wobei die Druckerniedrigungsgeschwindigkeit mindestens 0.1 bis 1 MPa/s beträgt, vorzugsweise 0.1 MPa/s.

**19.** Pulvermetallurgisches Verfahren nach einem der Ansprüche 13 bis18, **dadurch gekennzeichnet, dass** das Sintern das Erhitzen besagter kompakter Mischung auf eine Temperatur zwischen 1150 °C und 1650 °C beinhaltet, bevorzugt 1600 °C für die Dauer von 30 bis 90 Minuten, vorzugsweise 60 Minuten.

**20.** Pulvermetallurgisches Verfahren nach einem der Ansprüche 13 bis 19, **dadurch gekennzeichnet, dass** das Verfahren nach dem Sintervorgang (v) eine weitere Stufe (vi) der Bearbeitung des feuerfesten keramischen Materials umfasst.

**21.** Strukturteil enthaltend das keramische Material noch einem der Ansprüche 1-12.

FIG. 1A

FIG. 1B

FIG. 1C

FIG. 1D

FIG. 2

| Moles de $Y_2O_3$ | Temp. de solidus | Compacité après frittage $(C_1)$ | Porosité $(100-C1)$ | Porosité ouverte (non traversante) | Porosité fermée | Compacité après passage à 1800°C $(C_2)$ | Différence de volume $(C_2-C_1)$ | Fissures |
|---|---|---|---|---|---|---|---|---|
| 8 % | 2500°C | 86,3 % | 13,7 % | 0,4 % | 13,3 % | 88,8 % | 2,31 % | non |
| 5 % | 2500°C | 90,8 % | 10,7 % | 0,4 % | 10,3 % | 91,6 % | 0,79 % | non |
| 3 % | 2610°C | 91,8 % | 8,2 % | 0,5 % | 7,7 % | 92,5 % | 0,72 % | non |
| 1 % | 2800°C | 96,4 % | 3,6 % | 0,5 % | 3,1 % | 96,6 % | 0,24 % | ~ non |
| 0,5 % | 2805°C | 96,0 % | 4,0 % | 2,9 % | 1,1 % | / | / | ~ oui |
| 0 % | 2810°C | 96,0 % | 4,0 % | 3,6 % | 0,4 % | 98,5 % | 1,63 % | oui |

FIG. 3

FIG. 4A

FIG. 4B

FIG. 5A

FIG. 5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 5681784 A

**Littérature non-brevet citée dans la description**

• **D.L PORTER ; A.H HEURE.** *Journal of American Ceramist Society,* 1979, vol. 62 (5-6), 298-305

• **N. ISUPOVA et al.** The HfO2-Y2O3 system in the region rich in hafnium dioxyde. *Inorganic material,* 1969, vol. 11 (5), 1658-1661